Europäisches Patentamt

European Patent Office

Office européen des brevets

(11) Publication number: **0 066 907**
**B1**

## (12) EUROPEAN PATENT SPECIFICATION

(45) Date of publication of patent specification: **13.11.85**

(21) Application number: **82200549.2**

(22) Date of filing: **06.05.82**

(51) Int. Cl.⁴: **A 21 C 9/08,** A 21 B 3/07,
B 65 G 47/51

(54) Trolley for automatically transferring bread loaves onto frames.

(30) Priority: **15.05.81 IT 2173081**

(43) Date of publication of application:
**15.12.82 Bulletin 82/50**

(45) Publication of the grant of the patent:
**13.11.85 Bulletin 85/46**

(84) Designated Contracting States:
**AT BE CH DE FR GB LI NL**

(56) References cited:
**DE-B-1 268 060**
**DE-B-1 708 885**
**FR-A-2 152 853**
**FR-A-2 351 601**
**NL-A-6 607 902**

(73) Proprietor: **Gerosa, Achille**
**Via Manzoni 77**
**I-22049 Valmadrera - Como (IT)**

(72) Inventor: **Gerosa, Achille**
**Via Manzoni 77**
**I-22049 Valmadrera - Como (IT)**

(74) Representative: **Giambrocono, Alfonso, Dr. Ing.
et al**
**Ing. A. Giambrocono & C. S.r.l. Via Rosolino Pilo
19/B**
**I-20129 Milano (IT)**

Courier Press, Leamington Spa, England.

# Description

The invention relates to a trolley for automatically transferring bread loaves from a stepwise advancing conveyor belt of a bread loaves moulding machine onto frames carried by the said trolley.

From FR—A—2.351.601 a frame support trolley is known comprising a plurality of stationary slide guides for the sliding thereon of frames each frame comprising a framwork provided with an endless belt passing over two idle rollers and provided with a transverse control rod having extremities projecting beyond said framework, the function of said projecting extremities being that of facilitating the discharging of the bread loaves carried by the endless belt into the oven. A drawback of this type of trolley is the need of manually transferring the bread loaves from the moulding machine onto the endless belt of the frame.

The FR—A—2.152.853 discloses a machine of the transfer type according to which trays carrying bread loaves, or other similar material, loaded at a bottom station onto rails moving along a vertical endless path and are discharged at an upper station. This type of machine does not satisfy the requirement of transferring automatically bread loaves from a stepwise advancing belt onto frames of the type comprising an endless belt.

The advantages offered by the invention are mainly to provide a trolley which embodies the advantages but avoids the drawbacks of the conventional trolleys or similar machines.

The trolley for automatically transferring bread loaves from a stepwise advancing conveyor belt of a bread loaves moulding machine onto frames each comprising one endless belt to support the bread loaves having transversally disposed a control rod with extremities projecting beyond said frame said endless belt being movable by means of the said control rod whose extremities are destinated to be engaged by means of entrainment means, is characterised in that it comprises a main structure containing a plurality of superposed substantially rectangular frame supporting units each unit for supporting one of said frames; connecting means for connecting the four corners of one unit to the four corners of each immediately underlying and abovelying unit; means for determining a stepwise raising of the uppermost of said units so as to position successively each said unit at the level of said conveyor belt; and entrainment means for determining a stepwise movement of the endless belt of the frame at the level of the conveyor belt in synchronism with the stepwise advancing of the said conveyor belt.

One way for carrying out the invention is described in detail below with reference to the drawings which illustrate only one specific embodiment, in which:

Fig. 1 is a side view of the trolley ready for loading a first uppermost frame;

Fig. 2 shows the trolley in the position for loading the lowermost frame;

Fig. 3 is a section taken along line III—III of figure 1;

Fig. 4 is a view from above;

Fig. 5 shows a conventional endless belt type frame.

With reference to said figures, the trolley, indicated overall by the reference numeral 1, comprises a main metal framework comprising four vertical angle uprights 2, a base 3, a cover 4 and bars 5 for connecting together and reinforcing the uprights 2. The trolley 1 is mounted on idle casters 6 for its manual movement.

A plurality of superposed frame support units 7, 7' and 7" is disposed parallel to the base 3 between the vertical uprights 2 and each unit comprises two longitudinal angle members 12 and cross members 12' (fig. 3) forming in the whole a substantially rectangular framework having corners and of a dimension for exactly accommodating one frame 8 of the type described in FR—A—2.351.601, i.e. having an endless belt 9 passing over two idle rollers 10 and provided with a transverse rod 11 with extremities 11' projecting beyond the same frame.

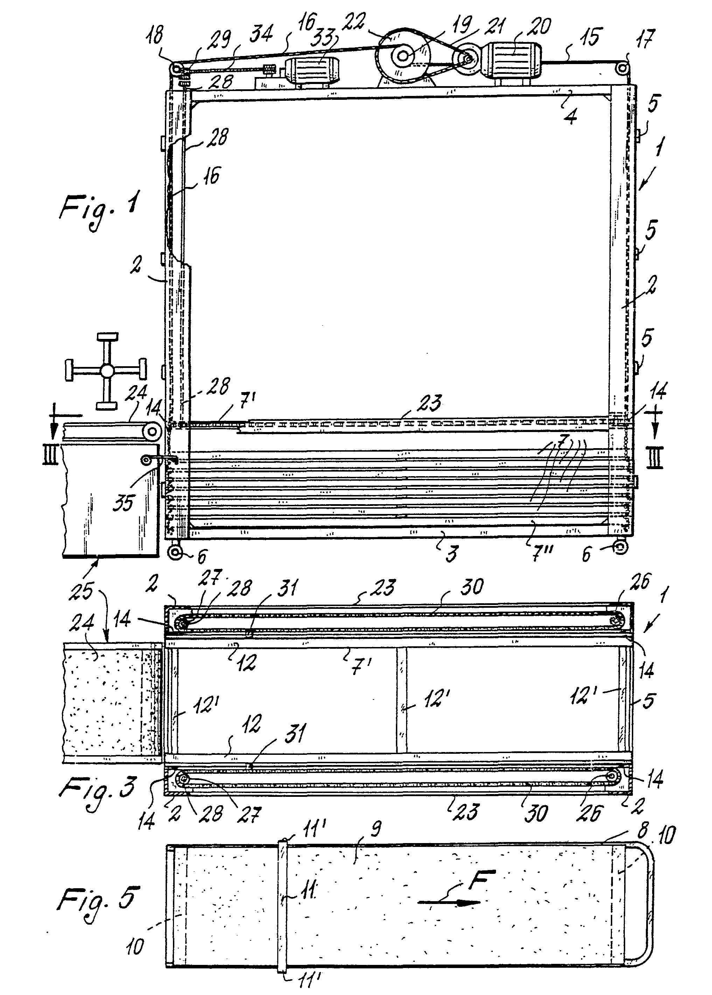

The frame support units 7, 7' and 7" are guided along the uprights 2 and one unit is connected with its corners to the underlying unit by chain portions 13 (fig. 2) of equal length. At 14, on the corners of the uppermost unit 7, there are connected (figs. 1 and 2) one end of four cables 15, 15' and 16, 16' passing about guide pulleys 17, 17' and 18, 18' idly mounted on the four corners of the cover 4, the other end of each cable being wound about cable winding drums 19, 19' which are rotated in either direction by a geared motor 20, a chain 21 and a sprocket wheel 22 also mounted on the cover 4.

On the main metal framework of trolley 1, between the uprights 2 and at the same level of a conveyor belt 24 of a conventional bread loaves moulding machine 25, two longitudinal members 23 are disposed parallel to units 7, 7' and 7". At their end distant from the moulding machine 25 each member 23 carries an idle sprocket wheel 26 having vertical axis and at the opposed end close to said moulding machine each of said members carries a further sprocket wheel 27, each keyed onto a vertical shaft 28, the upper end of which projects beyond the cover 4 and carries a further sprocket wheel 29 keyed thereon.

A chain 30 (fig. 3) passes endlessly about the pairs of sprocket wheels 26 and 27, and carries suitably spaced-apart pairs of fingers 31 (only one pair is shown in fig. 3) so positioned to engage the projecting extremities 11' (fig. 5) of the rods 11 of the frame 8 which is positioned on that frame support unit 7, 7' or 7" located at the level of the conveyor belt 24 of the moulding machine 25.

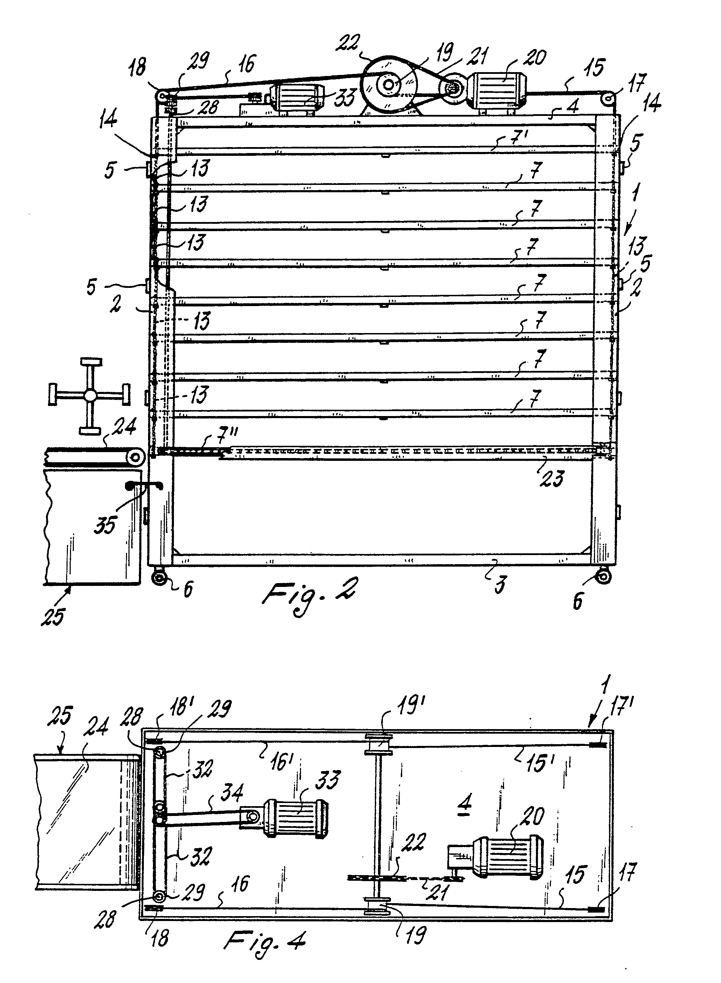

Endless chains 32 (fig. 4) engage with the sprocket wheels 29, and are driven in one or other direction by a geared motor 33 and transmission 34 on the cover 4. The transmissions 32 and 34 are arranged so that they rotate the vertical shafts 28 in the same direction and at the same speed.

When in operation, the trolley 1 is arranged with its frame support units 7 and 7" lowered and superposed and the unit 7' at the level of the longitudinal members 23 (fig. 1), said units 7, 7' and 7" each being provided with a frame 8 with its transverse rod 11 disposed to the far left with reference to fig. 5, the trolley 1 being moved close to the moulding machine 25 and hooked thereto for example by means of hooks 35. In this position, a pair of fingers 31 engages with the projecting extremities 11' of the rod 11 of the frame 8 supported by the uppermost unit 7'.

The motor for stepwise moving the conveyor belt 24 of the moulding machine 25 is synchronised with the geared motor 33 in such a manner that for each movement of the belt 24 through one step there is a corresponding movement through one step of the fingers 31, and consequently a movement of the belt 9 of the frame 8 through one step (arrow F, Fig. 5). Thus at each step, a row of bread loaves becomes transferred from the belt 24 on to the belt 9. When the rod 11 reaches the right hand end of the frame 8, a suitable microswitch (not shown) stops the motor of the moulding machine 25 and the geared motor 33, and starts the geared motor 20, with corresponding raising of the unit 7' and the raising, by means of the chain portions 13, of the immediately underlying unit 7 until this latter becomes disposed at the same level as the belt 24. When said underlying element 7 reaches this latter level, a further suitable microswitch (not shown) interrupts operation of the geared motor 20 and again starts the motor of the moulding machine 25, in order to transfer bread loaves on to another frame 8 carried by said underlying unit 7.

This procedure continues until the frame 8 carried by the lowermost unit 7" (fig. 2) becomes filled, after which the trolley 1 is removed from the moulding machine 25 and a further trolley 1 is placed in position.

The electrical circuit has not been illustrated since it can be constructed in different ways by any expert of the art, and in addition no illustration or description has been given of possible photoelectric cell or similar systems for interrupting the operation of the geared motor 33 and drive motor for the belt 24 should a complete row of bread loaves not be present at the discharge end of, the belt 24.

## Claims

1. A trolley (1) for automatically transferring bread loaves from a stepwise advancing conveyor belt (24) of a bread loaves moulding machine (25) onto frames (8), each frame (8) comprising an endless belt (9) to support the bread loaves having a transversally disposed – control rod (11) with extremities (11') projecting beyond said frame (8), said endless belt (9) being movable by means of the said control rod (11) whose extremities (11') are destinated to be engaged by means of entrainment means (26—34), characterised in that said trolley comprises a main structure (2—5) containing a plurality of superposed substantially rectangular frame supporting units (7, 7' and 7") each unit (7, 7',7") for supporting one of said frames (8); connecting means (13) for connecting the four corners of one unit to the four corners of each immediately underlying and abovelying units; means (14—22) for determining a stepwise raising of the uppermost (7) of said units so as to position successively each said unit at the level of said conveyor belt (24); and said entrainment means (26—34) determining a stepwise movement of the endless belt (9) of a frame (8) at the level of the conveyor belt (24) in synchronism with the stepwise advancing of the said conveyor belt (24).

2. A trolley as claimed in claim 1, characterised in that said connecting means are portions of chain (13) of equal length.

3. A trolley as claimed in claim 1, characterised in that said means (14—22) for determining the stepwise raising of the uppermost frame support unit (7) comprises cables (15, 15' — 16, 16') having a first end connected (14) to one corner of said uppermost frame support unit (7) and a second end wound about to at least one cable winding drum (19, 19').

4. A trolley as claimed in claim 1, characterised in that said entrainment means for determining a stepwise movement of the endless belt (9) of the frame (8) at the level of the conveyor belt (24) comprises fingers (31) making part of the entrainment chain (30) carried by said main structure (2—5) at the level of the conveyor belt (24) of the bread loaves moulding machine (25), said fingers (31) being arranged to engage said projecting extremities (11') of the transversal rod (11) of the endless belt (9).

## Revendications

1. Chariot (1) pour le transfert automatique de miches de pain sur des plateaux (8) à partir d'un transporteur à bande (24) d'une machine (25) à former les miches de pain, chaque plateau (8) comportant une bande sans fin (9) portant les miches de pain, cette bande ayant une tige de commande (11) disposée transversalement, dont les extrémités (11') dépassent le dit plateau (8), la dite bande sans fin (9) étant apte à être actionnée par la dite tige de commande (11) dont les extrémités (11') sont destinées à être engagées par des moyens d'entraînement (26—34), caractérisé en ce que le dit chariot présente une structure principale (2—5) contenant un grand nombre de dispositifs de support (7, 7' et 7") de plateaux, sensiblement rectangulaires et superposés, chaque dispositif (7, 7'; 7") supportant un plateau (8); des moyens de connexion (13) pour relier les quatre coins d'un dispositif aux quatre coins de chaque dispositif directement inférieur et supe-1rieur; des moyens (14—22) pour déterminer une élévation pas à pas du dispositif (7) le plus haut pour positionner successivement chacun des dits dispositifs au niveau du dit transporteur (24); et les dits moyens d'entraînement (26—34) déterminant un mouvement pas à pas de la bande sans fin (9) d'un plateau (8) au niveau du transporteur (24).

2. Chariot selon la revendication 1, caractérisé en ce que les dits moyens de connexion sont des parties d'une chaîne (13) ayant chacune la même longueur.

3. Chariot selon la revendication 1, caractérisé en ce que les dits moyen (14—22) pour déterminer l'élévation pas à pas du dispositif de support de plateau le plus haut (7) comprennent des câbles (15, 15'—16, 16') dont une extrémité (14) est reliée à un coin du dit dispositif de support de plateau le plus haut (7), et dont l'autre extrémité est enroulée autout au moins tambour d'enroulement de câble (19, 19').

4. Chariot selon la revendication 1, caractérisé en ce que les dits moyens d'entraînement pour déterminer un mouvement pas à pas de la bande sans fin (9) du plateau (8) au niveau transporteur à bande (24) comprennent des doigts (31) faisant partie d'une chaîne d'entraînement (30) supportée par la dite structure principale (2—5) au niveau du transporteur à bande (24) de la machine à former les miches de pain (25), les dits doigts (31) étant agencés pour engager les dites extrémités en dépassement (11') de la tige transversale (11) de la bande sans fin (9).

**Patentansprüche**

1. Wagen (1) zum automatischen Beschicken von Brotlaiben von einem sich schrittweise vorwärtsbewegenden Transportband (24) einer Brotlaib-Formmaschine (25) aus auf Rahmen (8), wobei jeder Rahmen (8) zum Tragen der Brotlaibe ein Endlosband (9) aufweist, das einen quer angeordneten Steuerstab (11) mit über den Rahmen (8) hinausragenden Enden (11') aufweist, und wobei das Endlosband (9) mittels des Steuerstabs (11) bewegbar ist, dessen Enden dazu geeignet sind, von Mitnehmern (26—34) erfaßt zu werden, dadurch gekennzeichnet, daß der Wagen (1) ein Hauptgerüst (2—5) mit einer Mehrzahl von übereinander angeordneten, im wesentlichen rechteckigen Rahmentrageinheiten (7, 7', 7'') aufweist, wobei jede Rahmentrageinheit (7, 7', 7'') zum Tragen eines der Rahmen (8) dient, daß Verbindungsmittel (13) zum Verbinden der vier Ecken einer Rahmentrageinheit mit den vier Ecken der jeweils unmittelbar darunter bzw. darüber liegenden Rahmentrageinheit vorgesehen sind, das Mittel (14—22) zur Vorgabe eines stufenweisen Anhebens der obersten Rahmentrageinheit (7') der genannten Rahmentrageinheiten vorgesehen sind, so daß nacheinander jede der Rahmentrageinheiten in der Höhe des Transportbandes (24) angeordnet ist und daß mittels der Mitnehmer (26—34) eine schrittweise Bewegung des Endlosbandes (9) eines Rahmens (8) in Höhe des Transportbandes (24) synchron mit der schrittweisen Vorwärtsbewegung des Transportbandes (24) vorgebbar ist.

2. Wagen nach Anspruch 1, dadurch gekennzeichnet, daß die Verbindungsmittel gleichlange Kettenstücke (13) sind.

3. Wagen nach Anspruch 1, dadurch gekennzeichnet, daß die Mittel (14—22) zur Vorgabe eines stufenweisen Anhebens der obersten Rahmentrageinheit (7') Kabel (15, 15'—16, 16') aufweisen, mit einem ersten, mit einer Ecke der obersten Rahmentrageinheit (7') verbundenen (14) Ende und einem zweiten, um mindestens eine Kabeltrommel (19, 19') gewickelten Ende.

4. Wagen nach Anspruch 1, dadurch gekennzeichnet, daß die Mitnehmer (26—34) zur Vorgabe einer schrittweisen Bewegung des Endlosbandes (9) des Rahmens (8) in der Höhe des Transportbandes (24) Finger (31) aufweisen, die einen Teil einer vom Hauptgerüst (2—5) in der Höhe des Transportbandes (24) der Brotlaib-Formmaschine (25) getragenen Mitnehmerkette (30) bilden und daß die Finger (31) zum Erfassen der herausragenden Enden (11') des quer angeordneten Steuerstabs (11) des Endlosbandes (9) angeordnet sind.

Fig. 1

Fig. 3

Fig. 5

Fig. 2

Fig. 4